# EUROPEAN PATENT SPECIFICATION

(11) **EP 3 236 049 B1**
(45) Date of publication and mention of the grant of the patent: **11.03.2020**
(21) Application number: 17163541.0
(22) Date of filing: 29.03.2017
(51) Int. Cl.: F02C 7/232, F02C 9/28, F02C 9/46

(54) **FUEL SYSTEMS FOR TURBOMACHINES**
KRAFTSTOFFSYSTEME FÜR TURBOMASCHINEN
SYSTÈMES DE COMBUSTIBLE POUR TURBOMACHINES

(30) Priority: 21.04.2016 US 201615134524
(43) Date of publication of application: 25.10.2017
(73) Proprietor: Hamilton Sundstrand Corporation, Charlotte, NC 28217 (US)
(72) Inventor: CORETTO, August M., Manchester, CT 06040 (US); RICKIS, Aaron, Feeding Hills, CT 01030 (US)
(74) Representative: Dehns

(56) References cited:
- EP-A1- 1 295 021
- US-A- 4 602 479
- US-A1- 2012 042 657

## Description

### BACKGROUND

### 1. Field

The present disclosure relates to turbomachines, more specifically to fuel systems for turbomachines.

### 2. Description of Related Art

In a turbine engine, a shaft shearing is a failure event that needs to be detected and responded to as quickly as possible. Over-speeding of the engine occurs due to instant reduction of resistance associated with shaft shearing. Once an over-speeding condition occurs, fuel flow to the turbine must be shut down as quickly as possible to prevent further damage to the engine and aircraft. It is an architectural challenge to meet the stringent shutdown requirements while trying to maintain lightweight and non-complex systems.

Such conventional methods and systems have generally been considered satisfactory for their intended purpose. However, there is still a need in the art for improved fuel systems for turbomachines. The present disclosure provides a solution for this need.

WO02/01055 relates to fuel control or delivery systems for an engine. US 4,602,479 relates to fuel control. US 2012/0042657 relates to regulating fuel flow.

### SUMMARY

According to a first aspect, a fuel system for a turbomachine according to claim 1 is provided.

The shutdown pressure is supplied from a main pump. In certain embodiments, the main pump flow is fine filtered.

The SDSV can be a pressure actuated valve and can include a signal port for receiving a shutoff signal pressure. The SDSV can be configured to move between a closed state to an opened state wherein the shutdown pressure can be supplied to the MPSOV when the signal port is exposed to the shutoff signal pressure.

The shutoff signal pressure can be less than shutdown pressure such that a pressure greater or equal to shutdown pressure applied to the signal port can maintain the SDSV in the closed state. The signal port can be operatively connected to an over-speed actuator such that shutdown pressure flows from the over-speed actuator to the signal port when over-speed is detected.

The system can further include a normal pressure line configured to supply a normal pressure to the MPSOV to urge the MPSOV toward the closed position, wherein the normal pressure is insufficient to close the MPSOV in a normal operation. The normal pressure can be a pump interstage pressure. In certain embodiments, the MPSOV can include a normal spring bias to urge the MPSOV toward the closed position, wherein the normal spring bias is insufficient to close the MPSOV in a normal operation.

In accordance with at least one aspect of this disclosure, a method includes determining an over-speed condition of a turbomachine and supplying a shutdown pressure to a minimum pressure and shutoff valve (MPSOV) from an shutdown signal valve (SDSV) according to claim 11.

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a schematic flow diagram of an embodiment of a system in accordance with this disclosure, shown in a normal operating state; and
Fig. 2 is a schematic flow diagram of the embodiment of Fig. 1, shown in a shutdown state (e.g., due to over-speeding).

### DETAILED DESCRIPTION

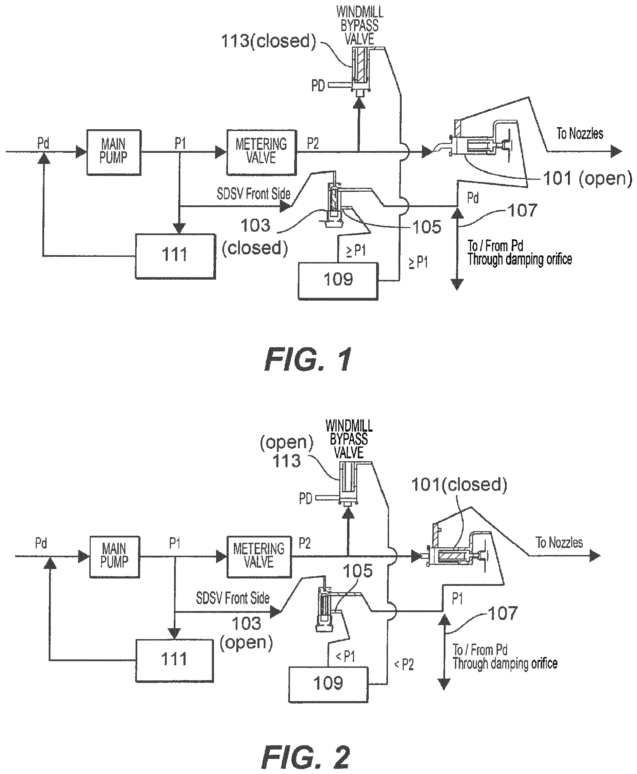

Reference will now be made to the drawings wherein like reference numerals identify similar structural features or aspects of the subject disclosure. For purposes of explanation and illustration, and not limitation, an illustrative view of an embodiment of a system in accordance with the disclosure is shown in Fig. 1 and is designated generally by reference character 100. Other embodiments and/or aspects of this disclosure are shown in Fig. 2. The systems and methods described herein can be used to shut off fuel flow rapidly (e.g., in the event of shaft shearing).

Referring to Figs. 1 and 2, a fuel system 100 (e.g., and integrated fuel pump control (IFPC)) for a turbomachine includes a minimum pressure and shutoff valve (MPSOV) 101 disposed between a fuel source (not shown) and a fuel nozzle (not shown) of the fuel system 100 and configured to move between an opened position wherein fuel can flow to the fuel nozzle (e.g., as shown in Fig. 1), and a closed position wherein fuel is prevented from flowing to the fuel nozzle (as shown in Fig. 2). The system 100 includes a shutdown signal valve (SDSV) 103 that is operatively connected to the MPSOV 101 and configured to selectively supply a shutdown pressure to the MPSOV 101 in a shutdown state such that the shutdown pressure forces the MPSOV 101 to the closed position (as shown in Fig. 2).

As shown, the shutdown pressure can be supplied from a main pump flow. Any other suitable location for supplying the shutdown pressure is contemplated herein. In certain embodiments, the main pump flow is fine filtered first before being sent through to the SDSV 103.

In certain embodiments, as shown, the SDSV 103 can be a pressure actuated valve and can include a signal port 105 for receiving a shutoff signal pressure. The SDSV 103 can be configured to move between a closed state (e.g., as shown in Fig. 1) to an opened state (as shown in Fig. 2) wherein the shutdown pressure can be supplied to the MPSOV 101, when the signal port 105 is exposed to the shutoff signal pressure.

The shutoff signal pressure can be less than shutdown pressure such that a pressure greater or equal to shutdown pressure applied to the signal port 105 can maintain the SDSV 103 in the closed state. The signal port 105 can be operatively connected to an over-speed actuator 109 (e.g., a solenoid valve) such that shutdown pressure flows from the over-speed actuator 109 to the signal port 105 when over-speed is detected (e.g., after shaft shear).

It is contemplated that the SDSV 103 can be any other suitable valve type (e.g., an electromechanical valve) configured to operate in any suitable manner. It is also contemplated that a shaft shearing event may be directly or indirectly (e.g., via over speeding) sensed in any suitable manner, and SDSV 103 can be actuated (e.g., by a controller connected to a shaft shear/over speed sensor) in any suitable manner.

The system 100 can further include a normal pressure line 107 configured to supply a normal pressure to the MPSOV 101 to urge the MPSOV 101 toward the closed position. However, the normal pressure is insufficient to close the MPSOV 101 in a normal operation and acts as a reference to which the MPSOV will set the minimum pressure. The normal pressure in the normal pressure line 107 can be a pump interstage pressure Pd (e.g., derived downstream of a pressure regulating valve 111 as shown). In certain embodiments, the MPSOV 101 can include a normal spring bias to urge the MPSOV 101 toward the closed position, the normal spring bias and/or the normal pressure being insufficient to close the MPSOV 101 in a normal operation.

In accordance with at least one aspect of this disclosure, a method includes determining an over-speed condition of a turbomachine and supplying a shutdown pressure to a minimum pressure and shutoff valve (MPSOV) 101 from an shutdown signal valve (SDSV) 103. Embodiments of the method can be executed using any suitable hardware (e.g., a memory and processor) and/or software (e.g., associate with an engine controller, for example).

In turbomachines, shutdown can be controlled by the IFPC. In certain conditions, the main turbomachine shaft can shear, causing rapid engine acceleration. One or more sensors can sense the rapid acceleration. In such a case, an engine controller recognizes speed up and sends a shutdown signal to the IFPC. Traditionally, pressure would decay on the front side of the MPSOV 101 after opening a windmill bypass valve (WBV) 113 via an over-speed actuator (e.g., a solenoid), which slowly closes the MPSOV 101 due to a bias on the back side of the MPSOV 101. However, this is a relatively slow decay.

As described herein, the IFPC can activate one or more over-speed actuators 109 (e.g., a solenoid) to operate the SDSV 103 (and along with the WBV 113 in certain embodiments to allow recirculation of excess flow) and decay engine speed and pressure. When operated, the SDSV 103 injects a high pressure to the back side of the MPSOV 101 to rapidly close the MPSOV 101 regardless of the pressure still acting on the front side of the MPSOV 101.

By virtue of utilizing a very small and/or lightweight valve (the SDSV 103) to port high pressure flow to the back of the MPSOV 101, a quick shutdown of a turbine engine can be achieved (in either a normal or over-speed condition). Embodiments as described above can greatly decrease the shutoff time over traditional systems. Also, utilizing a separate SDSV 103 valve allows the system to be lighter because of the minimal flow requirements for the valve. In addition, the separate valve can meet tighter leakage requirements.

The methods and systems of the present disclosure, as described above and shown in the drawings, provide for fuel systems with superior properties including rapid shutoff. While the apparatus and methods of the subject disclosure have been shown and described with reference to embodiments, those skilled in the art will readily appreciate that changes and/or modifications may be made thereto without departing from the scope of the subject disclosure.

## Claims

1. A fuel system (100) for a turbomachine, comprising:
a main pump;
a minimum pressure and shutoff valve (MPSOV) (101) disposed between a fuel source and a fuel nozzle of the fuel system (100) and configured to move between an opened position wherein fuel can flow to the fuel nozzle, and a closed position wherein fuel is prevented from flowing to the fuel nozzle;
a shutdown signal valve (SDSV) (103) operatively connected to the MPSOV (101) and configured to selectively supply a shutdown pressure to the MPSOV (101) in a shutdown state such that the shutdown pressure forces the MPSOV (101) to the closed position, and wherein the shutdown pressure is supplied from a main pump flow; and
a bypass valve (WBV) (113) connected to the MPSOV (101) and SDSV (103) such that when the MPSOV (101) closes, the excess flow will be re-circulated to the pump inlet through a metering valve upstream of the WBV and then through the WBV (113) such that the WBV (113) allows the excess flow to recirculate to the main pump after the MPSOV (101) is shutoff by the SDSV (103).

2. The system of claim 1, wherein the fuel system comprises means to provide a fine filtered main pump flow.

3. The system of claim 1, wherein the SDSV (103) is a pressure actuated valve and includes a signal port (105) for receiving a shutoff signal pressure.

4. The system of claim 3, wherein the SDSV (103) is configured to move between a closed state to an opened state wherein the shutdown pressure is supplied to the MPSOV (101), when the signal port (105) is exposed to the shutoff signal pressure.

5. The system of claim 4, wherein the shutoff signal pressure is less than shutdown pressure such that a pressure greater or equal to shutdown pressure applied to the signal port (105) will maintain the SDSV (103) in the closed state.

6. The system of claim 5, wherein the signal port (105) is operatively connected to an over-speed actuator such that shutdown pressure flows from the over-speed actuator to the signal port when over-speed is detected.

7. The system of claim 1, further comprising a normal pressure line (107) configured to supply a normal pressure to the MPSOV (101) to urge the MPSOV (101) toward the closed position, wherein the normal pressure is insufficient to close the MPSOV (101) in a normal operation.

8. The system of claim 7, wherein the normal pressure is a pump interstage pressure.

9. The system of claim 8, wherein the MPSOV (101) further includes a normal spring bias to urge the MPSOV (101) toward the closed position, wherein the normal spring bias is insufficient to close the MPSOV (101) in a normal operation.

10. The system of claim 1, wherein the WBV (113) and SDSV (103) are actuated by the same signal pressure to decrease operation time.

11. A method for operating a fuel system (100) of a turbomachine, comprising:
determining an over-speed condition of the turbomachine;
supplying a shutdown pressure from a main pump flow to a minimum pressure and shutoff valve (MPSOV) (101) disposed between a fuel source and a fuel nozzle of the fuel system from a shutdown signal valve (SDSV); and
recirculating excess fuel flow through to a main pump through a metering valve and then through a bypass valve (113) downstream of the metering valve after the MPSOV is shut off by the SDSV.

## Patentansprüche

1. Kraftstoffsystem (100) für eine Turbomaschine, Folgendes umfassend:
eine Hauptpumpe;
ein Mindestdruck- und Absperrventil (MPSOV) (101), das zwischen einer Kraftstoffquelle und einer Kraftstoffdüse des Kraftstoffsystems (100) angeordnet ist und dazu konfiguriert ist, sich zwischen einer offenen Position, in der Kraftstoff zu der Kraftstoffdüse strömen kann, und einer geschlossenen Position, in der Kraftstoff daran gehindert wird, zu der Kraftstoffdüse zu strömen, zu bewegen;
ein Abschaltsignalventil (SDSV) (103), das mit dem MPSOV (101) wirkverbunden und dazu konfiguriert ist, dem MPSOV (101) in einem Abschaltzustand selektiv einen Abschaltdruck zu liefern, sodass der Abschaltdruck das MPSOV (101) in die geschlossene Position zwingt, und wobei der Abschaltdruck von einem Hauptpumpenstrom geliefert wird; und
ein Umgehungsventil (WBV) (113), das mit dem MPSOV (101) und dem SDSV (103) verbunden ist, sodass, wenn sich das MPSOV (101) schließt, der Überschussstrom durch ein Messventil stromaufwärts von dem WBV und dann durch das WBV (113) wieder zu dem Pumpeneinlass zurückgeführt wird, sodass das WBV (113) es dem Überschussstrom erlaubt, zu der Hauptpumpe zurückgeführt zu werden, nachdem das MPSOV (101) durch das SDSV (103) abgesperrt wurde.

2. System nach Anspruch 1, wobei das Kraftstoffsystem Mittel umfasst, um einen fein filtrierten Hauptpumpenstrom bereitzustellen.

3. System nach Anspruch 1, wobei das SDSV (103) ein druckbetätigtes Ventil ist und einen Signalport (105) beinhaltet, um einen Absperrsignaldruck zu empfangen.

4. System nach Anspruch 3, wobei das SDSV (103) dazu konfiguriert ist, sich zwischen einem geschlossenen Zustand in einen offenen Zustand zu bewegen, wobei der Abschaltdruck an das MPSOV (101) geliefert wird, wenn der Signalport (105) dem Absperrsignaldruck ausgesetzt ist.

5. System nach Anspruch 4, wobei der Absperrsignaldruck niedriger ist als ein Abschaltdruck, sodass ein Druck größer oder gleich dem Abschaltdruck, der auf den Signalport (105) ausgeübt wird, das SDSV (103) in geschlossenem Zustand hält.

6. System nach Anspruch 5, wobei der Signalport (105) mit einem Überdrehzahlantrieb wirkverbunden ist, sodass der Abschaltdruck von dem Überdrehzahlantrieb zu dem Signalport strömt, wenn eine Überdrehzahl erkannt wird.

7. System nach Anspruch 1, ferner eine Normaldruckleitung (107) umfassend, die dazu konfiguriert ist, einen Normaldruck an das MPSOV (101) zu liefern, um das MPSOV (101) in die geschlossene Position zu drängen, wobei der Normaldruck nicht ausreicht, um das MPSOV (101) in einem Normalbetrieb zu schließen.

8. System nach Anspruch 7, wobei der Normaldruck ein Pumpenzwischendruck ist.

9. System nach Anspruch 8, wobei das MPSOV (101) ferner eine normale Federvorspannung beinhaltet, um das MPSOV (101) in die geschlossene Position zu drängen, wobei die normale Federvorspannung nicht ausreicht, um das MPSOV (101) in einem Normalbetrieb zu schließen.

10. System nach Anspruch 1, wobei das WBV (113) und das SDSV (103) durch den gleichen Signaldruck angetrieben werden, um eine Betriebszeit zu verringern.

11. Verfahren zum Betreiben eines Kraftstoffsystems (100) einer Turbomaschine, Folgendes umfassend:
Bestimmen einer Überdrehzahlbedingung der Turbomaschine;
Liefern eines Abschaltdrucks von einem Hauptpumpenstrom von einem Absperrsignalventil (SDSV) an ein Mindestdruck- und Absperrventil (MPSOV) (101), das zwischen einer Kraftstoffquelle und einer Kraftstoffdüse des Kraftstoffsystems angeordnet ist; und
Zurückführen überschüssigen Kraftstoffstroms zu einer Hauptpumpe durch ein Messventil und dann durch ein Umgehungsventil (113), das sich stromabwärts des Messventils befindet, nachdem das MPSOV durch das SDSV abgesperrt wurde.

## Revendications

1. Système de combustible (100) pour une turbomachine, comprenant :
une pompe principale ;
une soupape d'arrêt et de pression minimale (MPSOV) (101) disposée entre une source de combustible et une buse de combustible du système de combustible (100) et configurée pour se déplacer entre une position ouverte dans laquelle le combustible peut s'écouler vers la buse de combustible, et une position fermée dans laquelle le combustible ne peut pas s'écouler vers la buse de combustible ;
une soupape de signal d'arrêt (SDSV) (103) reliée de manière opérationnelle à la MPSOV (101) et configurée pour fournir sélectivement une pression d'arrêt à la MPSOV (101) dans un état d'arrêt de sorte que la pression d'arrêt amène la MPSOV (101) dans la position fermée, et dans lequel la pression d'arrêt est fournie à partir d'un écoulement de pompe principale ; et
une soupape de dérivation (WBV) (113) reliée à la MPSOV (101) et à la SDSV (103) de sorte que lorsque la MPSOV (101) se ferme, l'écoulement excédentaire sera remis en circulation vers l'entrée de pompe à travers une soupape de dosage en amont de la WBV puis à travers la WBV (113) de sorte que la WBV (113) permet à l'écoulement excédentaire de recirculer vers la pompe principale après l'arrêt de la MPSOV (101) par la SDSV (103).

2. Système selon la revendication 1, dans lequel le système de combustible comprend des moyens pour fournir un écoulement de pompe principale filtré fin.

3. Système selon la revendication 1, dans lequel la SDSV (103) est une soupape actionnée par pression et comporte un orifice de signal (105) pour recevoir une pression de signal d'arrêt.

4. Système selon la revendication 3, dans lequel la SDSV (103) est configurée pour passer d'un état fermé à un état ouvert dans lequel la pression d'arrêt est fournie à la MPSOV (101), lorsque l'orifice de signal (105) est exposé à la pression de signal d'arrêt.

5. Système selon la revendication 4, dans lequel la pression de signal d'arrêt est inférieure à la pression d'arrêt de sorte qu'une pression supérieure ou égale à la pression d'arrêt appliquée à l'orifice de signal (105) maintiendra la SDSV (103) à l'état fermé.

6. Système selon la revendication 5, dans lequel l'orifice de signal (105) est relié de manière opérationnelle à un actionneur de survitesse de sorte que la pression d'arrêt s'écoule de l'actionneur de survitesse vers l'orifice de signal lorsqu'une survitesse est détectée.

7. Système selon la revendication 1, comprenant en outre une conduite de pression normale (107) configurée pour fournir une pression normale à la MPSOV (101) pour amener la MPSOV (101) vers la position fermée, dans lequel la pression normale est insuffisante pour fermer la MPSOV (101) dans un fonctionnement normal.

8. Système selon la revendication 7, dans lequel la pression normale est une pression interétage de pompe.

9. Système selon la revendication 8, dans lequel la MPSOV (101) comporte en outre une sollicitation de ressort normale pour amener la MPSOV (101) vers la position fermée, dans lequel la sollicitation de ressort normale est insuffisante pour fermer la MPSOV (101) dans un fonctionnement normal.

10. Système selon la revendication 1, dans lequel la WBV (113) et la SDSV (103) sont actionnées par la même pression de signal pour réduire le temps de fonctionnement.

11. Procédé de fonctionnement d'un système de combustible (100) d'une turbomachine, comprenant :
la détermination d'une condition de survitesse de la turbomachine ;
la fourniture d'une pression d'arrêt à partir d'un écoulement de pompe principale vers une soupape d'arrêt et de pression minimale (MPSOV) (101) disposée entre une source de combustible et une buse de combustible du système de combustible à partir d'une soupape de signal d'arrêt (SDSV) ; et
la remise en circulation de l'écoulement de combustible excédentaire à travers une pompe principale à travers une soupape de dosage puis à travers une soupape de dérivation (113) en aval de la soupape de dosage après que la MPSOV a été fermée par la SDSV.
